# FASCICULE DE BREVET EUROPEEN

(11) **EP 2 268 099 B1**
(45) Date de publication et mention de la délivrance du brevet: **10.08.2016**
(21) Numéro de dépôt: 10165662.7
(22) Date de dépôt: 11.06.2010
(51) Int. Cl.: H04W 88/04

(54) **Procédé d'extension d'un réseau d'appareils domestiques commandés par un équipement de gestion par signaux radiofréquences**
Verfharen zur Aufrèstung eines Netzwerks von Haushaltsgeräte bestellt durch eine Ausrüstung des Managements durch Signalfunkfrequenzen.
Process of extension of a network of home appliances, commanded by an equipment of management by radio frequency signals.

(30) Priorité: 23.06.2009 FR 0954246
(43) Date de publication de la demande: 29.12.2010
(73) Titulaire: Delta Dore, 35270 Bonnemain (FR)
(72) Inventeur: Giot, Lionel, 35520, MONTREUIL LE GAST (FR); Leduc, Benoît, 22830, PLOUHASNE (FR)
(74) Mandataire: Le Guen-Maillet

(56) Documents cités:
- WO-A2-01/78307
- GB-A- 2 344 675
- US-A1- 2005 024 254
- US-B1- 6 816 477

## Description

La présente invention concerne un procédé d'extension d'un réseau d'appareils domestiques commandés par un équipement de gestion par signaux radiofréquences.

L'invention peut, de manière non limitative, s'appliquer à un réseau d'appareils domestiques tels que des volets roulants.

Il est connu des systèmes de commande d'appareils domestiques qui permettent à partir d'un équipement de gestion par émission d'un signal radiofréquence porteur d'une commande, appelé signal de commande, de commander soit individuellement chaque appareil domestique qui est destinataire de cette commande, soit simultanément un ensemble de ces appareils qui sont alors tous destinataires de cette commande.

Pour cela, un appareil domestique et équipement de gestion doivent être associés pour former un réseau de communication au cours d'une phase préalable, dite d'association durant laquelle l'équipement de gestion et l'appareil domestique échangent des signaux porteurs d'une commande spécifique. A l'issue de cette phase, l'équipement de gestion reconnaît de manière unique chaque appareil domestique du réseau et l'équipement de gestion et les appareils domestiques peuvent échanger des signaux radiofréquences porteurs de commande ou d'autres informations telles que par exemple des accusés de réception ou des paramètres de mesure prise par un appareil domestique.

Lorsqu'un nouvel appareil doit être associé à un réseau existant, l'appareil domestique doit être sous la portée de l'équipement de gestion pour qu'ils puissent échanger entre eux des signaux radiofréquences que ce soit lors de la phase d'association ou pour qu'il puisse recevoir et émettre des signaux une fois associé.

Cette contrainte impose de définir un compromis entre la puissance d'émission des signaux radiofréquences de l'équipement de gestion (et des appareils domestiques) et la distance maximale qui sépare l'équipement de gestion et chaque appareil domestique. Plus la puissance d'émission sera importante et plus la distance pourra être importante entre chaque appareil domestique et l'équipement de gestion. Toutefois, des normes interdisent l'utilisation de puissance élevée et la distance qui sépare l'équipement de gestion de chaque appareil domestique d'un réseau est relativement réduite.

Il est connu d'utiliser un répéteur radiofréquence pour étendre cette distance. La fonction d'un répéteur est de recevoir un signal et de l'amplifier avant de l'émettre. Cette fonction est réalisée systématiquement c'est-à-dire quel que soit le contenu du signal et quelle que soit sa destination.

Cependant, l'utilisation de répéteur augmente le coût financier de la mise en oeuvre d'un réseau d'appareils domestiques et requiert de connaître à l'avance les futures extensions de ce réseau pour savoir où positionner le ou les répéteurs afin de les utiliser de manière optimale. Le plus souvent, une extension du réseau est réalisée, puis les communications entre chaque nouvel appareil domestique et l'équipement de gestion sont testées empiriquement. Un répéteur radiofréquence est alors ajouté si la communication entre ces nouveaux appareils et l'équipement de gestion n'est pas de qualité suffisante. Ainsi, si une nouvelle extension du réseau est réalisée plus tard, le répéteur mis en place précédemment peut ne pas pouvoir être utilisé car hors de portée des nouveaux appareils domestiques et un autre répéteur doit alors être installé, augmentant ainsi le coût de cette nouvelle extension.

Un autre exemple se trouve dans le document WO01/78307 Le problème résolu par la présente invention est d'étendre un réseau d'appareils domestiques commandés par un équipement de gestion par signaux radiofréquences qui remédie aux inconvénients ci-dessus.

A cet effet, la présente invention concerne un procédé d'extension d'un réseau de communication formé d'au moins un appareil domestique commandé par un équipement de gestion par signaux radiofréquences. Le procédé consistant, en outre, à recevoir un signal, est caractérisé en ce qu'il comporte une étape d'analyse d'un signal reçu au cours de laquelle l'appareil domestique détermine si le signal reçu porte une commande et, dans ce cas, une étape d'émission d'un nouveau signal au cours de laquelle l'appareil domestique récepteur émet un nouveau signal porteur de ladite commande.

Ainsi, lorsqu'un appareil domestique forme un réseau de communication avec l'équipement de gestion, et que cet appareil domestique reçoit un signal radiofréquence, cet appareil domestique détermine si ce signal porte une commande à destination d'au moins un appareil domestique. La commande reçue par l'appareil domestique est alors émise par cet appareil domestique qui étend ainsi la portée de l'équipement de gestion. Ainsi, si un nouvel appareil domestique et l'équipement de gestion doivent échanger des signaux de commande entre eux alors qu'ils sont hors de portée l'un de l'autre, ce nouvel appareil domestique reçoit les signaux porteurs d'une commande émis par un autre appareil domestique à portée de l'équipement de gestion et relaie ainsi le signal de commande émis initialement par cet équipement de gestion. Le nouvel appareil domestique peut ainsi être associé et communiquer avec l'équipement de gestion via un, voire plusieurs, appareils domestiques du réseau.

Selon l'invention, chaque appareil domestique ne se limite pas uniquement à générer un signal porteur d'une commande qu'il a reçu car il conditionne cette émission au fait qu'un signal reçu porte une commande. Ainsi, seuls les signaux qui portent une commande sont étendus à l'ensemble du réseau évitant ainsi d'encombrer inutilement ce réseau par l'émission de signaux radiofréquences qui n'ont pas à être propagés sur l'ensemble du réseau.

Un autre des avantages du procédé est que chaque appareil domestique est utilisé pour étendre un réseau de communication existant sans pour autant perturber le fonctionnement normal de ces appareils domestiques qui continuent à échanger des signaux avec l'équipement de gestion. De plus, la mise en oeuvre du procédé dans chaque appareil domestique, qu'il fasse partie d'un réseau existant ou qu'il soit nouveau, évite l'utilisation de répéteur, ce qui a pour conséquence d'une part, de diminuer le coût financier d'une extension du système et de devoir planifier les extensions futures du réseau de communication pour éviter l'utilisation d'un nombre trop important de répéteurs radiofréquences.

Selon un mode de réalisation du procédé, la commande comporte un identifiant de chaque appareil domestique destinataire de la commande, et dans lequel au cours de ladite étape d'analyse chaque identifiant compris dans une commande portée par un signal reçu est comparé avec un identifiant mémorisé par l'appareil domestique.

L'identifiant d'un appareil domestique est déterminé de manière unique lorsque cet appareil domestique est associé à l'équipement de gestion. Cet identifiant, qui est par exemple un mot de bits, est mémorisé par l'appareil domestique. Ainsi, lorsqu'un appareil domestique reçoit un signal porteur d'une commande, il compare chaque identifiant de la commande reçue avec l'identifiant qu'il mémorise. L'appareil domestique récepteur considère alors que la commande lui est destinée lorsque l'identifiant qu'il mémorise est égal à l'un des identifiants d'appareil de la commande reçue.

Selon un mode de réalisation, la destination d'un signal de commande émis par un appareil domestique est définie par un identifiant d'un appareil domestique (Ai) destinataire de la commande.

Ce mode permet d'imposer à un appareil domestique d'émettre un signal à destination d'un appareil domestique spécifique et à un autre appareil domestique récepteur d'un tel signal de ne pas le considérer.

De plus, lorsque la destination d'un signal émis par un appareil domestique est définie par un identifiant d'un appareil domestique destinataire de la commande, l'équipement de gestion peut comparer la liste des appareils domestiques qui ont émis ce signal porteur d'une commande spécifique par rapport à ceux qui devaient être utilisés et ainsi déterminer les appareils domestiques qui sont défectueux.

De plus, lorsqu'un appareil domestique est déterminé comme étant défectueux et que cet appareil domestique permet d'atteindre une partie des autres appareils domestiques, l'équipement de gestion peut émettre la même commande mais avec des identifiants d'appareils domestiques qui permettent d'atteindre ces autres appareils domestiques. En d'autres termes, la commande, qui emprunte un chemin défini par des identifiants est alors ré-émise mais en empruntant un autre chemin défini pour atteindre ces autres appareils domestiques.

Selon ses aspects matériels, la présente invention concerne un appareil domestique et un système de commande d'appareils domestiques par un équipement de gestion par signaux radiofréquences qui est caractérisé en ce que chaque appareil domestique met en oeuvre le procédé ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un système de commande à distance d'appareils domestiques,
La Fig. 2 représente schématiquement une commande,
La Fig. 3 représente un chronogramme qui illustre le fonctionnement du procédé du système SYST de la Fig. 1,
La Fig. 4 représente un exemple d'une allocation des slots d'une trame,
La Fig. 5 représente un autre exemple d'une allocation des slots d'une trame,
La Fig. 6 est une illustration d'un exemple de deux trames T successives formées chacune de huit slots, et
La Fig. 7 représente un mode de réalisation d'une architecture interne d'un appareil domestique.

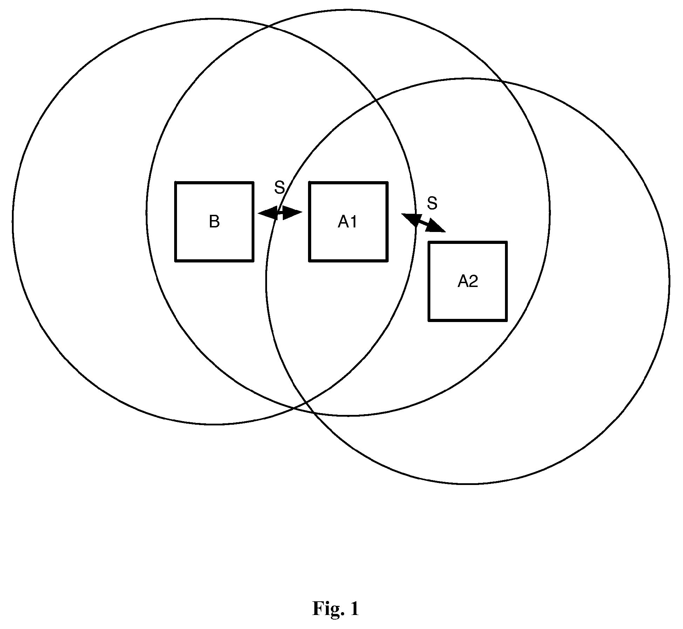

A la Fig. 1 est représenté un exemple de système SYST de commande à distance par signaux radiofréquences. Le système SYST comporte un équipement de gestion B et deux appareils domestiques A1 et A2. Les appareils domestiques Ai (i=1,2) et l'équipement de gestion B sont munis de moyens de communication radiofréquences qui leur permettent d'émettre et de recevoir des signaux radiofréquences S.

Plus précisément, les moyens de communication permettent à chaque appareil domestique de diffuser un signal S dans une zone géographique (représentée schématiquement par des cercles centrés sur les appareils) et, permettent à chaque appareil domestique Ai ainsi qu'à l'équipement de gestion B de recevoir un signal S et d'en extraire les informations qu'ils portent à la condition que le récepteur se trouve sous la portée de l'émetteur, c'est-à-dire dans le cercle représenté à la Fig. 1 centré sur l'appareil domestique Ai.

Par la suite, nous considèrerons que l'appareil domestique A1 est à portée de l'équipement de gestion B tandis que l'appareil domestique A2 n'est pas à la portée de l'équipement de gestion B mais uniquement à la portée de l'appareil domestique A1. La portée entre deux équipements radiofréquences est définie comme étant la distance maximale entre ces équipements au-delà de laquelle ces équipements ne peuvent pas communiquer par échange de signaux radiofréquences.

Selon l'invention, le procédé d'extension d'un réseau de communication formé d'au moins un appareil domestique commandé par un équipement de gestion par signaux radiofréquences, consiste, en outre, à recevoir un signal radiofréquence porteur ou non d'une commande C. Le procédé comporte une étape 200 d'analyse d'un signal reçu au cours de laquelle l'appareil domestique Ai détermine si le signal reçu porte une commande C et, dans ce cas, l'étape 200 est suivie d'une étape 300 d'émission d'un nouveau signal au cours de laquelle l'appareil domestique récepteur Ai émet un nouveau signal S porteur de ladite commande C.

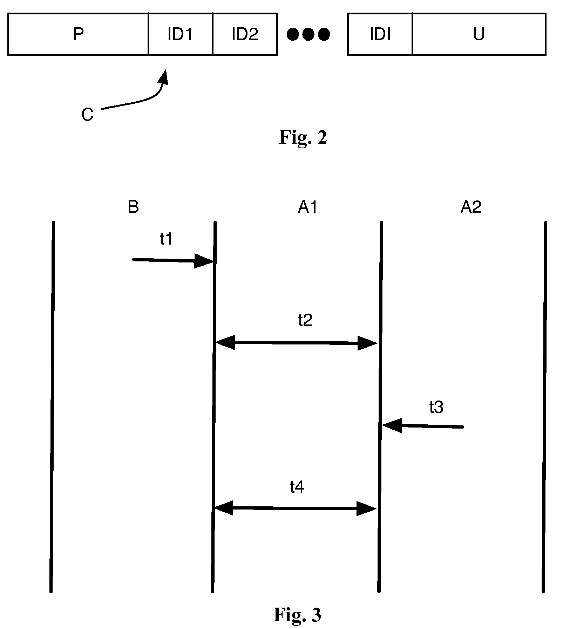

La Fig. 2 représente schématiquement une commande C selon l'invention.

La commande C est formée d'un préambule P qui définit, en outre, qu'il comporte une partie U de données utiles qui définit une action qu'un appareil domestique doit réaliser. Ainsi, au cours de l'étape 200, un appareil domestique considère qu'un signal reçu est porteur d'une commande si le préambule P est présent parmi les données portées par ce signal reçu.

Selon un mode de réalisation, la commande C comporte au moins un identifiant, IDi (i=1 à I). Chaque identifiant est relatif à un appareil domestique Ai qui est destinataire d'une commande C. Ainsi, à chaque commande C susceptible d'être émise par l'équipement de gestion B est associé au moins un identifiant IDi d'un appareil domestique Ai.

Par exemple, chaque identifiant IDi est un mot de bits qui représente de manière unique chaque appareil domestique Ai. Cet identifiant IDi est donné par l'équipement de gestion B à l'appareil domestique Ai lors de la phase d'association de cet appareil domestique Ai avec l'équipement de gestion B.

La Fig. 3 représente un chronogramme qui illustre le fonctionnement du procédé du système SYST de la Fig. 1.

Admettons que suite à l'émission d'un signal S par l'équipement de gestion B, l'appareil domestique A1 reçoit le signal S (temps t1). On peut noter que l'appareil domestique A2 n'a pas reçu ce signal S car il est hors de portée de l'équipement de gestion B.

Au cours de l'étape 200, l'appareil domestique A1 analyse alors le signal reçu S et détermine qu'il porte une commande C par lecture du préambule P. De plus, au cours de l'étape 200, l'appareil domestique A1 compare chaque identifiant IDi de cette commande C avec l'identifiant ID1 que cet appareil domestique a mémorisé lors de la phase d'association préalable.

Dans le cas où l'un des identifiants IDi de la commande C est égal à l'identifiant ID1, l'appareil domestique A1 est destinataire de la commande et exécute l'action définie par les données utiles de la partie U.

Dans le cas contraire, l'appareil domestique n'exécute pas cette action.

Les données de la partie U définissent une action d'un appareil domestique. Cette action est, par exemple dans le cas de volet roulants, la fermeture ou l'ouverture du volet roulant, une prise de mesure d'un paramètre extérieur au volet roulant (température,...). Cette action peut également demander à l'appareil domestique d'envoyer des informations telles qu'un accusé de réception de la commande et/ou d'autres informations relatives au fonctionnement ou la prise de mesure de l'appareil domestique. Selon la distance entre l'appareil domestique et l'équipement de gestion, ces informations peuvent (ou pas) être ajoutées aux données de la partie U et être émises par un signal porteur de la commande C.

Au cours de l'étape 300, l'appareil domestique A1 génère un nouveau signal S qui porte la commande C et émet ce signal au temps t2 (étape 300).

L'équipement de gestion B reçoit le signal S émis par l'appareil domestique A1 et le traite. Par exemple, dans le cas où les données utiles de la partie U de la commande comportent un accusé de réception, l'équipement de gestion B enregistre que l'appareil domestique A1 a bien reçu la commande C.

L'appareil domestique A2 reçoit également le signal S émis par l'appareil domestique A1 car ils se trouvent à portée l'un de l'autre.

Au cours de l'étape 200, l'appareil domestique A2 analyse alors le signal reçu S et détermine qu'il porte une commande C par lecture du préambule P. De plus, au cours de l'étape 200, l'appareil domestique A1 compare chaque identifiant IDi de cette commande C avec l'identifiant ID1 que cet appareil domestique a mémorisé lors de la phase d'association préalable.

Dans le cas où l'un des identifiants IDi de la commande C est égal à l'identifiant ID2, l'appareil domestique A2 est destinataire de la commande et exécute l'action définie par les données utiles de la partie U.

Dans le cas contraire, l'appareil domestique n'exécute pas cette action.

Au cours de l'étape 300, l'appareil domestique A2 génère un nouveau signal S qui porte la commande C et émet ce signal de commande au temps t3 (étape 300).

L'appareil domestique A1 reçoit le signal S émis par l'appareil domestique A2 et l'appareil domestique A1 met en oeuvre les étapes 200 et 300 telles que décrites précédemment.

Ainsi, l'équipement de gestion B et l'appareil domestique A1 peuvent échanger entre eux des signaux porteurs d'une commande C sans être pour autant à portée l'un de l'autre. L'appareil domestique A1 sert de relais entre l'équipement de gestion B et l'appareil domestique A2 lorsque les signaux S sont porteurs d'une commande C. Il peut ainsi exécuter la commande et envoyer des informations dans la partie U de ces commandes.

Ainsi, le procédé permet d'étendre un réseau de communication entre appareils domestiques Ai tout en limitant le coût de l'infrastructure réseau tout en permettant l'extension du réseau et en limitant la propagation des signaux radiofréquences à ceux qui portent une commande C.

Selon un mode de réalisation du procédé, au cours de l'étape 300, la destination d'un signal S porteur d'une commande C et émis par un appareil domestique Ai est définie par un identifiant IDj d'un autre appareil domestique Aj destinataire de la commande.

Pour cela, par exemple, les identifiants ID1,...,IDI de la commande C peuvent être ordonnés par ordre chronologique. Le premier identifiant détermine alors l'appareil domestique qui doit émettre en premier le signal S porteur de la commande C qui a été préalablement émis par l'équipement de gestion B. Une fois que cet appareil domestique a émis un signal S porteur de la commande C, son identifiant est retiré des identifiants de la commande C. Le nouveau premier identifiant de la commande détermine alors l'appareil domestique qui doit émettre un signal S porteur de la commande C suite à la réception du signal S émis par le premier appareil domestique et ainsi de suite pour tous les appareils domestiques qui sont déterminés comme étant destinataires par les identifiants de la commande C. On peut envisager également qu'une liste ordonnée d'identifiants soit ajoutée dans la partie U de la commande C.

Selon ce mode de réalisation, le signal S porteur d'une commande C est émis par un appareil domestique Ai mais cette fois-ci uniquement à destination de l'appareil domestique Aj identifié. Les signaux de commande C sont alors émis point à point en opposition avec le procédé précédent où le signal est diffusé.

Ce mode de réalisation est particulièrement avantageux car il permet de tester à distance si un appareil domestique spécifique fonctionne correctement. Il suffit pour cela de définir un ensemble d'appareils destinataires de manière à pouvoir atteindre de proche en proche cet appareil domestique. La liste ordonnée des identifiants de ces appareils domestiques est alors mise dans la commande C qui est émise. Dans le cas où l'un des signaux S porteurs de cette commande C et reçu par l'équipement de gestion B (qui sont émis par les appareils domestiques) ne comporte plus aucun identifiant IDi, l'appareil domestique en question fonctionne correctement. Par contre, dans le cas où le dernier signal S reçu par l'équipement de gestion B contient l'identifiant d'un appareil domestique, l'équipement de gestion B en déduit que cet appareil domestique présente un dysfonctionnement.

La mise en oeuvre de l'invention n'est pas liée à un système particulier de communications entre les appareils domestiques et entre ces appareils et l'équipement de gestion. Ce système doit toutefois permettre que chaque appareil domestique puisse émettre un signal radiofréquence, que chaque appareil domestique puisse recevoir un signal radiofréquence émis par un autre appareil domestique, et que l'équipement de gestion puisse recevoir un signal radiofréquence émis par un appareil domestique du système SYST.

Les systèmes de communications de type CDMA (Code Division Multiple Access), TDMA (Time Division Multiple Access) sont des systèmes qui peuvent être utilisés.

Par la suite, un mode de réalisation de l'invention est décrit dans le cas d'un système de communication de type TDMA.

Selon un système de type TDMA, l'utilisation temporelle de la bande de fréquence dédiée est divisée en intervalles de temps, appelés slots, qui sont alors alloués ou dédiés, soit à l'équipement de gestion B, soit aux appareils domestiques Ai. L'organisation temporelle de l'utilisation de la bande de fréquence, c'est-à-dire le positionnement temporel des slots, forme une trame T du signal S porteuse d'une commande C.

Le procédé comporte alors une étape 100 d'allocation des slots de la trame T relative à une commande C susceptible d'être émise par l'équipement de gestion B à destination d'appareils domestiques.

De préférence, dans le cas où l'équipement de gestion B est susceptible d'émettre plusieurs commandes C, une allocation particulière des slots sⱼ de la trame T est définie par commande C. Par ailleurs, seule une partie des slots de trame peut être allouée par commande C.

L'allocation des slots est, de préférence, réalisée lors d'une phase préalable d'association du système SYST.

Une fois l'allocation des slots réalisée, pour chaque commande C susceptible d'être émise par l'équipement de gestion B, tous les appareils domestiques Ai et l'équipement de gestion B sont synchronisés entre eux en temps par connaissance à la fois d'un temps de référence, noté t0, et des temps de début des slots qui leur sont dédiés pour l'émission d'un signal S porteur d'une commande C. La détermination du temps de référence t0 et des temps de début de chaque slot ainsi que leur connaissance par chacun des appareils domestiques et par l'équipement de gestion est mise en oeuvre par exemple lors d'échanges de signaux entre eux qui se produisent, par exemple, lors de la phase d'association et une fois qu'au moins une allocation des slots de trame a été réalisée.

Ainsi, suite à l'allocation des slots, pour chaque commande C susceptible d'être émise par l'équipement de gestion B, l'équipement de gestion B et chaque appareil domestique Ai connaissent les slots qui leurs sont dédiés pour cette commande. Lors de la réception de signaux radiofréquences par un appareil domestique, l'appareil domestique écoute pendant chaque slot de la trame, autre que celui ou ceux qui leurs sont dédiés, dans l'attente de réception d'un signal S, et lors de l'émission d'un nouveau signal, le signal S porteur de la commande C est émis pendant le ou les slots qui sont dédiés à cet appareil domestique.

Au cours de l'allocation des slots, au moins un slot de la trame T est dédié à chaque appareil domestique Ai pour que cet appareil domestique Ai émette un signal de commande S. Un slot dédié à un appareil domestique Ai est noté s_{Ai}.

Selon un mode de réalisation, un seul slot s_{Ai} de la trame T est dédié à chaque appareil domestique Ai pour qu'il émette un signal de commande C.

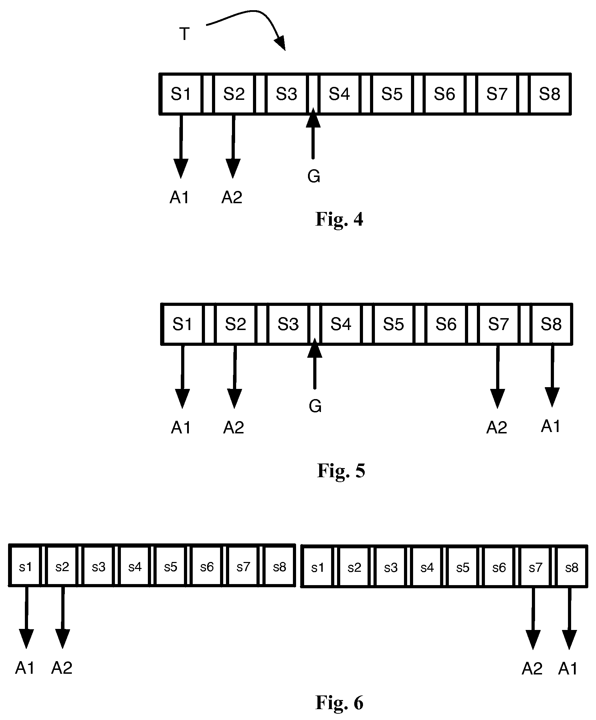

La Fig. 4 représente une telle allocation des slots d'une trame T dans le cas où les deux (N=2) appareils domestiques Ai sont destinataires de la commande C et que la trame est constituée de huit slots. Selon cet exemple, les slots s₁ et s₂ sont respectivement dédiés aux appareils A1 et A2.

On comprend que dans le cas où le nombre d'appareils domestiques destinataires d'une commande augmente, le nombre de slots dédiés de la trame T augmente en conséquence jusqu'à ce que tous les slots de la trame T, en l'occurrence huit, soient tous alloués.

Ainsi, selon une telle allocation des slots de trame, l'équipement de gestion B peut émettre une commande à destination au maximum de huit appareils domestiques.

On remarque également sur la Fig. 4 qu'un temps de garde G est ménagé entre les slots sⱼ de la trame T afin d'éviter tout recouvrement temporel entre ces slots.

Selon un autre mode de réalisation, deux slots s_{Ai1} et s_{Ai2} de la trame T sont dédiés à chaque appareil domestique Ai pour qu'il émette un signal de commande deux fois par trame.

La Fig. 5 représente un exemple d'une telle allocation des slots sⱼ d'une trame T dans le cas où les deux appareils domestiques Ai sont destinataires de la commande C et que la trame est constituée de huit slots (K=8). Selon cet exemple, le slot s_{Ai1} est le slot sⱼ et le slot s_{Ai2} est le slot s_{K-j+1}. Ainsi, les slots s₁ et s₆ sont dédiés à l'appareil domestique A1, les slots s₂ et s₅ sont dédiés à l'appareil domestique A2.

On peut noter qu'en multipliant le nombre de slots dédiés à chaque appareil domestique, c'est-à-dire le nombre d'émissions d'un signal de commande par trame, la fiabilité de la transmission de cette commande s'en trouve accrue. Cependant, en pratique, la durée totale de la trame T étant généralement contrainte à une valeur fixe, plus le nombre de slots dédiés à chaque appareil domestique est importante et plus la durée de chaque slot est diminuée, limitant alors la taille de la commande par slot.

Selon un mode de réalisation du procédé, au moins un slot dédié à un appareil domestique et au moins un slot dédié à un autre appareil domestique appartiennent à deux trames T successives.

Ce mode de réalisation est avantageux car il permet d'augmenter le nombre d'appareils domestiques destinataires d'une même commande C émise par l'équipement de gestion B sans pour autant diminuer la durée de chaque slot de la trame T.

La Fig. 6 est une illustration d'un exemple de deux trames T successives formées chacune de huit slots.

Selon cet exemple, au maximum huit appareils domestiques Ai pourront être gérés par l'équipement de gestion B par commande C du fait que deux slots sont alloués par appareil domestique, l'un dans la première des deux trames successives T et l'autre dans la seconde des deux trames successives T.

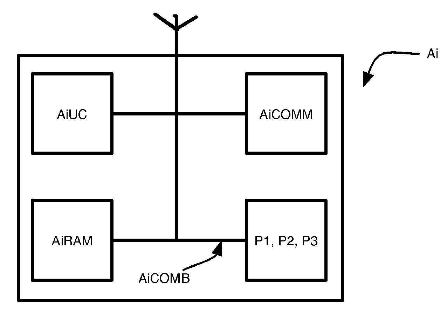

La Fig. 7 représente un mode de réalisation d'une architecture interne d'un appareil domestique Ai qui met en oeuvre le procédé.

L'appareil domestique Ai comporte un bus de communication AiCOMB auquel sont reliés une unité centrale AiUC, une mémoire non volatile AiROM, une mémoire vive AiRAM, des moyens AiCOMM de communication radiofréquence et une antenne AiANT.

La mémoire non volatile AiROM mémorise des programmes P1, P2 et P3 qui mettent en oeuvre les étapes du procédé. La mémoire non volatile AiROM est par exemple un disque dur. De manière plus générale, les programmes selon la présente invention sont mémorisés dans un moyen de stockage. Ce moyen de stockage est lisible par un microprocesseur. Ce moyen de stockage est intégré ou non à l'appareil domestique Ai, et peut être amovible. Lors de la mise sous tension de l'appareil domestique Ai, les programmes sont transférés dans la mémoire vive AiRAM qui contient alors le code exécutable de l'invention ainsi que les données nécessaires à la mise en oeuvre de l'invention.

Le programme P1 permet de déterminer si un signal, reçu par les moyens AiCOMM et l'antenne AiANT, porte une commande C qui définit une action d'au moins un appareil domestique. Cette détermination est conforme à l'étape 200 du procédé décrit précédemment.

Le programme P2 permet de déterminer si l'appareil domestique est destinataire d'une commande C portée par un signal reçu S.

Le programme P3 permet de générer un signal porteur d'une commande C et de l'émettre, par exemple au cours d'au moins un slot de trame T qui lui est dédié. Ces moyens utilisent entre autres les moyens de communication AiCOMM et l'antenne AiANT.

## Revendications

1. Procédé d'extension d'un réseau de communication formé d'au moins un appareil domestique commandé par un équipement de gestion par signaux radiofréquences, le procédé consistant, en outre, à recevoir un signal, à déterminer si le signal reçu porte une commande (C) et, dans ce cas, à émettre un nouveau signal (S) porteur de ladite commande (C), **caractérisé en ce que**
les signaux radiofréquences sont émis dans une bande de fréquence prédéfinie dont l'utilisation temporelle est définie par une trame de slots temporels, et **en ce que** le procédé comporte en outre
- une étape d'allocation (100) des slots de trame relative à chaque commande susceptible d'être émise par l'équipement de gestion à destination d'au moins un appareil domestique, au cours de laquelle au moins un slot de trame est dédié à chaque appareil domestique pour que cet appareil domestique émette un signal porteur d'une commande (C), et au moins un slot dédié à un appareil domestique et au moins un slot dédié à un autre appareil domestique appartiennent à deux trames successives,
- lors de la réception de signaux radiofréquences par un appareil domestique, l'appareil domestique écoute pendant chaque slot de trame, autre que celui ou ceux qui leurs sont dédiés, dans l'attente de réception d'un signal de commande (C), et
- lors de l'émission d'un nouveau signal, le signal de commande (S) est émis pendant le ou les slots qui sont dédiés à cet appareil domestique,

2. Procédé selon la revendication 1, dans lequel la commande (C) comporte un identifiant (IDi) de chaque appareil domestique (Ai) destinataire de la commande, et dans lequel au cours de ladite étape d'analyse chaque identifiant (IDi) compris dans une commande portée par un signal reçu est comparé avec un identifiant mémorisé par l'appareil domestique.

3. Procédé selon la revendication 2, dans lequel la destination d'un signal S porteur d'une commande C et émis par un appareil domestique (Ai) est définie par un identifiant (IDj) d'un autre appareil domestique (Aj) destinataire de la commande.

4. Procédé selon l'une des revendications précédentes, dans lequel un seul slot de la trame (T) est dédié à chaque appareil domestique pour que cet appareil domestique émette un signal porteur d'une commande (C).

5. Procédé selon la revendication 4, dans lequel deux slots de la trame (T) sont dédiés à chaque appareil domestique (Ai) pour qu'il émette un signal de commande deux fois par trame.

## Patentansprüche

1. Verfahren zur Erweiterung eines Kommunikationsnetzes, welches aus mindestens einem Haushaltsgerät besteht, das von einer Verwaltungsausrüstung durch Funkfrequenzsignale gesteuert wird, wobei das Verfahren außerdem daraus besteht, ein Signal zu empfangen, zu bestimmen, ob das empfangene Signal einen Befehl (C) überträgt, und in diesem Fall ein neues Signal (S), das den Befehl (C) überträgt, auszugeben,
**dadurch gekennzeichnet, dass** die Funkfrequenzsignale in einem vordefinierten Frequenzband ausgegeben werden, dessen temporäre Verwendung durch einen Rahmen temporärer Slots definiert wird, und dass das Verfahren ferner umfasst:
- einen Schritt der Zuordnung (100) der Rahmenslots relativ zu jedem Befehl, der geeignet ist, von der Verwaltungsausrüstung an das Ziel mindestens eines Haushaltsgeräts ausgegeben zu werden, während welchen Schritts mindestens ein Rahmenslot für jedes Haushaltsgerät dediziert wird, damit dieses Haushaltsgerät ein Signal ausgibt, das einen Befehl (C) überträgt, und wobei mindestens ein Slot, der für ein Haushaltsgerät dediziert wird, und mindestens ein Slot, der für ein anderes Haushaltsgerät dediziert wird, zu zwei aufeinanderfolgenden Rahmen gehören,
- wobei beim Empfang der Funkfrequenzsignale durch ein Haushaltsgerät das Haushaltsgerät während jedes Rahmenslots, der von jenem oder jenen verschieden ist, die für dieses dediziert sind, in Erwartung des Empfangs eines Befehlssignals (C) zuhört, und
- wobei bei der Ausgabe eines neuen Signals das Befehlssignal (S) während des oder der Slots, die für dieses Haushaltsgerät dediziert sind, ausgegeben wird.

2. Verfahren nach Anspruch 1,
wobei der Befehl (C) einen Identifikator (IDi) für jedes Haushaltsgerät (Ai) als Ziel des Befehls umfasst, und wobei während des Analyseschritts jeder Identifikator (IDi), der in einem Befehl enthalten ist, der von einem empfangenen Signal übertragen wird, mit einem Identifikator verglichen wird, der von dem Haushaltsgerät gespeichert wurde.

3. Verfahren nach Anspruch 2,
wobei das Ziel eines Signals S, das einen Befehl C überträgt und von einem Haushaltsgerät (Ai) ausgegeben wird, durch einen Identifikator (IDj) eines anderen Haushaltsgeräts (Aj) definiert wird, welches das Ziel des Befehls ist.

4. Verfahren nach einem der vorhergehenden Ansprüche, wobei ein einzelner Slot des Rahmens (T) für jedes Haushaltsgerät dediziert wird, damit dieses Haushaltsgerät ein Signal ausgibt, das einen Befehl (C) überträgt.

5. Verfahren nach Anspruch 4,
wobei zwei Slots des Rahmens (T) für jedes Haushaltsgerät (Ai) dediziert werden, damit dieses ein Befehlssignal zweimal pro Rahmen ausgibt.

## Claims

1. Method of extending a communication network consisting of at least one domestic appliance controlled by means of radiofrequency signals by a management device, the method including receiving a signal, determining whether the received signal carries a command (C) and, in this case, sending a new signal (S) carrying said command (C), **characterized in that**
- the radiofrequency signals are transmitted in a predefined frequency band whose time use is defined by a frame of time slots, and **in that** the method further includes
- a step (100) of allocating the frame slots relating to each command that can be sent by the management device to at least one domestic appliance, during which at least one frame slot is dedicated to each domestic appliance so that this domestic appliance sends a signal carrying a command (C), and at least one slot dedicated to a domestic appliance and at least one slot dedicated to another domestic appliance belong to two successive frames,
- on reception of radiofrequency signals by a domestic appliance, the domestic appliance listens during each frame slot other than that or those dedicated to it, pending reception of a command signal (C), and
- on sending a new signal, the command signal (S) is sent during the slot or slots dedicated to this domestic appliance.

2. Method according to Claim 1, wherein the command (C) includes an identifier (IDi) of each domestic appliance (Ai) receiving the command, and wherein during said analysis step each identifier (IDi) included in a command carried by a received signal is compared with an identifier stored by the domestic appliance.

3. Method according to Claim 2, wherein the destination of a signal S carrying a command C and sent by a domestic appliance (Ai) is defined by an identifier (IDj) of another domestic appliance (Aj) that receives the command.

4. Method according to any one of the preceding claims, wherein a single slot of the frame (T) is dedicated to each domestic appliance so that this domestic appliance sends a signal carrying a command (C).

5. Method according to Claim 4, wherein two slots of the frame (T) are dedicated to each domestic appliance (Ai) so that it sends a command signal twice in each frame.
